# EUROPEAN PATENT SPECIFICATION

(11) **EP 2 144 492 B1**
(45) Date of publication and mention of the grant of the patent: **21.06.2017**
(21) Application number: 08767138.4
(22) Date of filing: 07.05.2008
(51) Int. Cl.: A01J 7/00, A01K 1/12, A01J 5/017

(54) **MILKING EQUIPMENT POSITIONER AND METHOD OF INDICATING POSITION THEREOF**
VORRICHTUNG ZUM POSITIONIEREN EINER MELKVORRICHTUNG UND POSITIONSANZEIGEVERFAHREN DAFÜR
DISPOSITIF DE POSITIONNEMENT D'ÉQUIPEMENT DE TRAITE ET PROCÉDÉ POUR INDIQUER SA POSITION

(30) Priority: 09.05.2007 SE 0701117
(43) Date of publication of application: 20.01.2010
(73) Proprietor: DeLaval Holding AB, 147 21 Tumba (SE)
(72) Inventor: CRESPO, Eric, F-22520 Binic (FR)
(74) Representative: Lilliehorn, Tobias
(86) International application number: PCT/SE2008/050527
(87) International publication number: WO 2008/140406

(56) References cited:
- EP-A1- 1 716 749
- GB-A- 1 408 191
- JP-A- 6 178 628
- US-A- 5 596 945
- US-A- 5 862 776
- US-B1- 6 382 130

## Description

### TECHNICAL FIELD OF THE INVENTION

The present invention relates generally to dairy farming, and more specifically to milking equipment positioners.

### DESCRIPTION OF RELATED ART

Within milking parlors, milk is typically collected from milking animals by milking siphons or equipments. Each milking equipment includes several teat cups which are attached to the teats of a milking animal, and vacuum lines leading to the teat cups to withdraw milk from the milking animals.

In milking parlors, numerous stalls are provided to accommodate milking animals and provide spaces wherein they may be milked. To reduce costs and maintenance burdens, since each milking equipment will have its associated vacuum lines, pneumatic/electrical actuating mechanisms, and other such structure, milking equipments may be shared among the milking stalls. In order to facilitate easy relocation of milking equipments in milking parlors several apparatuses have been proposed.

US 6,382,130 discloses a milking equipment positioner for repositioning milking equipment within a milking parlor. A swing arm is pivotally mounted within a bearing so that it may swing in a swing arc defined in a plane which is at least substantially vertical. A milking equipment suitable for attachment to a milking animal's teats is carried on the swing arm so that it is repositioned by the swing arm; for example, the swing arm may reposition the milking equipment to milking platforms situated on opposite sides of milking parlors. The swing arm may be selectively affixed with respect to the bearing at selected angles within the swing arc, so that the swing arm (and milking equipment) can be locked into desired positions.

US 3,938,470 and US 3,929,103 disclose other similar milking equipment positioners for repositioning milking equipment within a milking parlor.

US 5,596,945 discloses a construction for automatically milking animals, such as cows, comprising a milking parlor with a milking robot and a covered area where the animals can move freely about. The milking parlor includes two adjacently arranged milking compartments. The milking robot is installed between the compartments so as to be movable from one to the other under the udder and teats of an animal therein whereby an animal is first milked in a compartment on one side, and then on the other compartment, from the other side.

US 5,862,776 discloses an apparatus and method for automatically milking animals, comprising a milking robot, provided with one or more arms for carrying robot equipment. The milking robot is guided into starting position by a sensor which is linked to support member and which determines the longitudinal position of the animal in the milking compartment.

### SUMMARY OF THE INVENTION

A drawback of the milking equipment positioner disclosed in the above mentioned US patents is that it lacks a reliable device indicating at which platform the milking equipment is moved at each instant.

Particularly, if such a positioner including a mechanical position sensor would be implemented, such sensor would not be reliable since it may not withstand the hard environment of the milking parlor. Failures and shut-downs would be frequently occurring.

An object of the present invention is thus to provide a milking equipment positioner and a method, respectively, which automatically establish whether the milking equipment is moved from one position to another in a reliable, yet cost efficient, manner.

A further object of the present invention is to provide such milking equipment positioner and method, which use other sensors than mechanical sensors.

These objects are according to the present invention attained by positioners and methods as claimed in the appended patent claims. According to a first aspect of the invention there is provided a milking equipment positioner for moving the milking equipment between at least two milking stalls, the positioner comprising a support rail or beam, a first part for holding milking equipment, and a second part arranged fixedly in or at the support beam. The first part is engagable with the support beam and is movable along the support beam between a first position at a first of the at least two milking stalls and a second position at a second of the at least two milking stalls . The second part is located between the first and second positions. One of the first and second parts includes sensing means provided for sensing each time the first part is moved passed the second part; and indicating means provided for indicating whether the first part is moved to the first or second position based on the sensing. Hereby, a reliable, simple, and cost efficient sensor for establishing a position of the milking equipment positioner is obtained. The sensor can hardly be soiled enough to cause a failure in operation.

In one embodiment, the support beam is hollow and made of a flexible, bendable, and non-conductive material such as plastic or glass fiber, the second part comprises a permanent magnet arranged within the support beam, and the first part comprises an electric circuit, which is influenced by the changing magnet field caused by the relative movement between the first and second parts as the first part passes by the second part.

By such embodiment a very simple, robust, and reliable solution is obtained. A true contactless measurement is performed. The operation of the milking equipment positioner and its position sensing is entirely independent of the soiled and dirty environment of the milking parlor, in which it is used.

According to a second aspect of the invention there is provided a milking system comprising at least one milking equipment positioner of the first aspect. The milking system comprises at least two milking stalls, each capable of housing a milking animal during milking, wherein the support beam is arranged with respect to the milking stalls so that the milking equipment while held by the first part is located (i) at a first one of the milking stalls when the first part is located in the first position and (ii) at a second one of the milking stalls when the first part is located in the second position. Such milking system is cost efficient while still the location of the milking equipment is established automatically. Preferably the milking system comprises a large number of milking stalls and a plurality of milking equipment positioners, e.g. one for each pair of milking stalls or even one for each two pairs of milking stalls.

In one embodiment, the indicating means is provided for indicating, preferably visibly or audiably, to a user of the positioner whether the first part is moved to the first position or to the second position. Hereby, the user can be aware of that the automatic establishing of position is operating properly.

In another embodiment, the indicating means is provided for indicating to a vacuum supply controller whether the first part is moved to the first position or to the second position to thereby allow the vacuum supply controller to automatically supply vacuum to the milking equipment, optionally after a time delay. Hereby, the user is relieved from the work of switching on vacuum manually, e.g. by activating an actuation mechanism of an automatic milking controller.

In yet another embodiment, the indicating means is provided for indicating to a milk meter controller whether the first part is moved to the first position or to the second position to thereby allow the milk meter controller to automatically associate a following milk meter measurement with a new milking stall. Hereby, accurate milk yield measurements can be performed entirely automatically.

The three embodiments described above may be combined in any manner to reach still further embodiments of the invention. According to a third aspect of the invention there is provided a method of indicating position of a milking equipment positioner moving the milking equipment between at least two milking stalls. The positioner comprises a support beam and a first part for holding milking equipment, wherein the first part is engagable with the support beam and movable along the support beam between a first position at a first of the at least two milking stalls and a second position at a second of the at least two milking stalls . The method features sensing each time the first part is moved passed a second part arranged fixedly in or at the first support beam between the first and second positions; and indicating whether the first part is moved to the first position or to the second position based on the sensing.

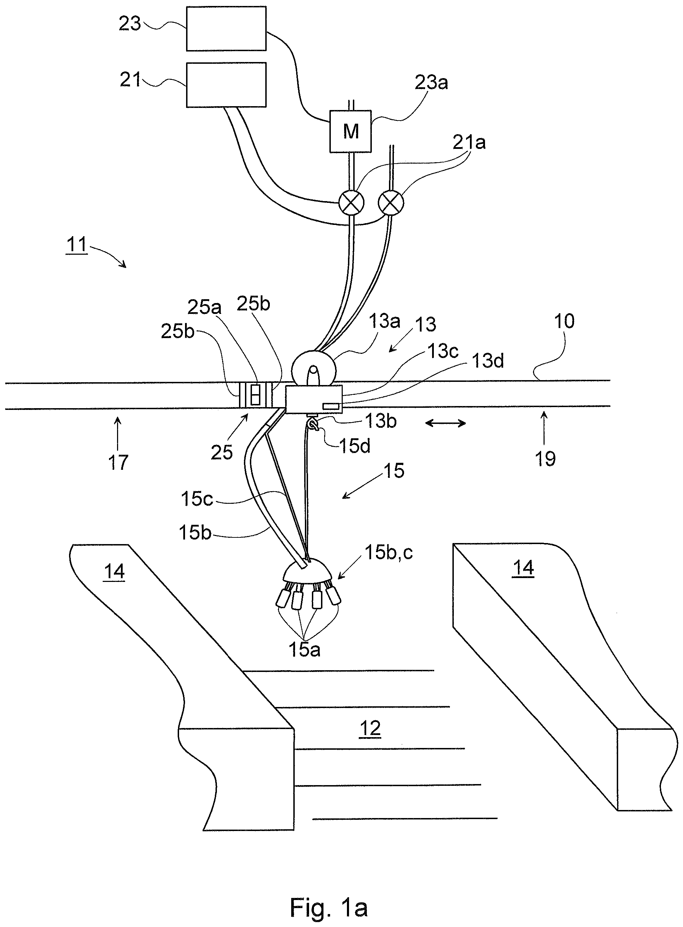

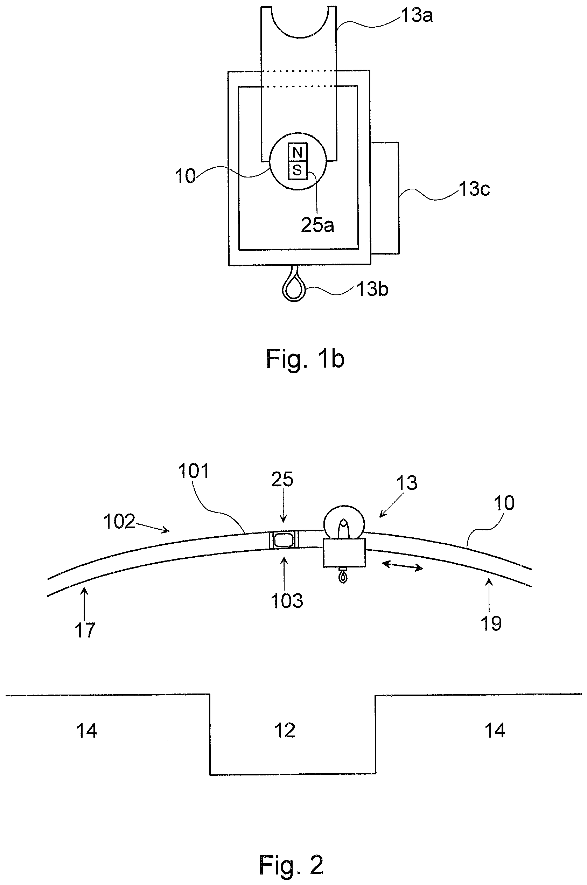

Further characteristics of the invention and advantages thereof, will be evident from the following detailed description of preferred embodiments of the present invention given hereinafter and the accompanying Figs. 1-4, which are given by way of illustration only, and are thus not limitative of the present invention.

### BRIEF DESCRIPTION OF THE DRAWINGS

Figs. 1a-b illustrate schematically, in perspective and side views, respectively, a milking equipment positioner according to an embodiment of the present invention.
Fig. 2 illustrates schematically, in a side view, a milking equipment positioner according to an alternative embodiment of the present invention.
Fig. 3 illustrates schematically, in a top view, a milking system comprising a plurality of the milking equipment positioner of Figs. 1a-b.
Figs. 4a-b illustrate schematically, in top views, milking equipment positioners according to yet alternative embodiments of the present invention.

### DETAILED DESCRIPTION OF EMBODIMENTS

Referring to the drawings, particularly to Figs. 1a-b, a milking equipment positioner is designated generally by the reference numeral 11. The milking equipment positioner 11 comprises a hollow support beam 10 arranged substantially horizontally above an aisle 12 of a milking parlor (the milking parlor not being fully shown), with the aisle 12 being located between two rows 14 of milking stalls. In general, the aisle 12 and the rows 14 of milking stalls are elongated and extend for a substantial distance along the length of the milking parlor, but only short sections are illustrated in Fig. 1a. The support beam 10 preferably extends between the milking stalls, and is supported by the milking stalls, walls and/or ceiling of the building enclosing the milking parlor at a suitable height above the aisle 12.

The milking equipment positioner 11 comprises further a first part 13 for holding milking equipment 15, wherein the first part 13 is engagable with the support beam 10 and movable along the support beam 10 between a first 17 and a second 19 position. The first 17 and second 19 positions are preferably located so that the milking equipment 15 while held by the first part 13 can be moved between milking stalls at different ones of the two rows 14 of milking stalls as being indicated by the double-directed arrow in Fig. 1a. Preferably, stoppers or holders (not illustrated) are arranged at the first 17 and second 19 positions to stop the movement of the first part 13 or even to hold the first part 13 in a fix position.

In the embodiment of Figs. 1a-b, the first part 13 includes a roll 13a, a support device 13b including an attachment means in the form of a ring or loop, and an electric circuit 13c to be described further below.

The milking equipment 15 comprises teat cups 15a connected to a source of vacuum (not illustrated) via milk tubes 15b and pulse tubes 15c in a common manner. An attachment means 15d in the form of a hook or similar is provided for releasably attaching the milking equipment 15 to the first part 13. Preferably, the milking equipment 15 is suspending from the first part 13.

In order to be capable of switching on vacuum to, and switching off vacuum from, the teat cups 15a a vacuum supply controller 21 may be provided to control valve means 21a in the tubes connecting the teat cups 15a to the vacuum source.

Further, a milk meter controller 23 may be provided to control a milk meter 23a to measure the milk yield from each milking animal that is milked.

The milking animals to be milked are led to the milking stalls in the two rows 14 of milking stalls, usually facing away from the aisle 12 so that their hind legs are closest to the aisle 12, though the milking animals could be oriented in other configurations instead (e.g., in Herringbone or tandem configurations). The milking personnel may walk along the aisle 12 and move the milking equipment 15 to a milking stall at one of the two rows 14 of milking stalls and attach the milking equipment to the teats of a milking animal therein in order to milk the milking animal. When milking of the milking animal is completed, the milking equipment 15 is detached from the teats of the milking animal and moved to a milking stall at the other side of the aisle 12 to milk a second milking animal. The milking equipment detachment (including switching off the vacuum) may be performed manually or automatically.

According to an aspect of the invention, the milking equipment positioner 11 comprises a second part 25 arranged fixedly in the support beam 10 between the first 17 and second 19 positions. The second part comprises a permanent magnet 25a and on each side thereof a respective stopper 25b, which prevents the permanent magnet from moving within the support beam 10.

Preferably, the stoppers 25b is of a rubber material or other flexible material and is slightly larger than the inner diameter of the support beam 10 so that a first one of the stoppers 25b, the permanent magnet 25a, and the second one of the stoppers 25b can be moved to a proper location within the support beam 10 by pushing them forward in the support beam 10 by a long stick or similar. The support beam 10 is preferably of a plastic material or glass fiber material so that it can easily be cut into suitable lengths and so that it will not interfere substantially with the operation of the permanent magnet 25a. In an exemplary embodiment the support beam 10 is of glass fiber and has an outer diameter of 20 mm and an inner diameter of 17 mm.

The electric circuit 13c of the first part 13 is provided for sensing each time the first part 13 is moved passed the permanent magnet 25a and thereby the second part 24. This is easily performed since the changing magnet field surrounding the electric circuit will change with time and thus induce a current in the electric circuit 13c. The electric circuit 13c is preferably implemented as an electronic device, e.g. an electronic circuit on a printed circuit board.

The first part 13 is provided for indicating whether the first part 13 is moved to the first 17 or second 19 positions based on the sensing. To this end, the first part 13 may be provided with a device 13d for providing, preferably visibly or audiably, an indication to a user of the milking equipment positioner 11 positioner whether the first part is moved to the first 17 or second 19 positions. For instance, the device 13d may comprise lights of different colors, e.g. red and green, for indicating whether the milking equipment positioner 11 is moved to the first 17 or second 19 positions.

Alternatively, or additionally, an indication device (not illustrated) connected to the first part 13 is arranged at the milking equipment 15 to indicate to the user each time the first part is moved between the first 17 and second 19 positions and optionally whether the first part is moved to the first position 17 or to the second position 19. Preferably, such an indication device is attached to the milk 15b or pulse 15c tubes.

Alternatively, or additionally, the electric circuit 13c is connected to the vacuum supply controller 21 and is provided for indicating to the vacuum supply controller 21 whether the first part 13 is moved to the first position 17 or to the second position 19 to thereby allow the vacuum supply controller 21 to automatically supply vacuum to the milking equipment 15, optionally after a time delay such as e.g. four seconds, by means of controlling the valve means 21a. Hereby, the farmer is relieved from one operation step: to manually switch on the vacuum for milking.

Yet alternatively, or additionally, the electric circuit 13c is connected to the milk meter controller 23 and is provided for indicating to the milk meter controller 23 whether the first part 13 is moved to the first position 17 or to the second position 19 to thereby allow the milk meter controller 23 to automatically associate a following milk meter measurement as performed by the milk meter 23 with a new milking stall. Hereby, appropriate milk measurements are recorded automatically.

By means of this aspect of the invention, the first part 13 is moved passed the second part 25 without contacting the second part 25. The measurement is thus performed in a contactless manner. A reliable sensor is obtained without mechanically moving parts.

In an alternative embodiment, the magnet may be comprised in the movable first part and the electric circuit may be comprised in the second fixed part.

Fig. 2 illustrates yet another embodiment wherein the support beam 10 has a bend 101 and is mounted with its convex side 102 facing upwards to thereby allow the first part 13 and thereby the milking equipment to be moved from a central part 103 of the support beam 10 and into the first 17 and second 19 positions by aid of gravity.

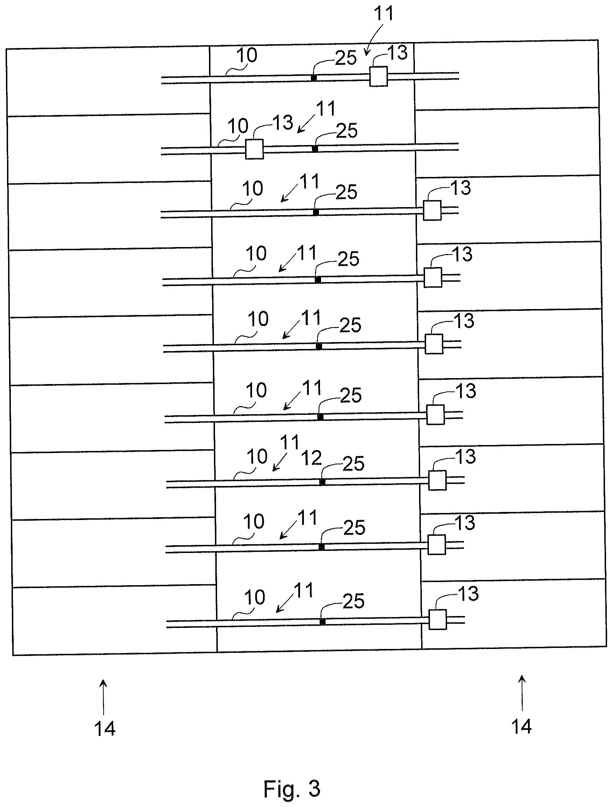

Fig. 3 illustrates schematically, in a top view, a milking system comprising a plurality of the milking equipment positioner 11 of Figs. 1a-b. In the illustrated embodiment a milking equipment positioner 11 is provided for each pair of oppositely located milking stalls.

However, in other embodiments more than two milking stalls may share a single milking equipment 15. For instance, two or more pairs of oppositely located milking stalls may share a single milking equipment 15. In case four milking stalls share a single milking equipment 15, it is preferably used alternately at different sides of the aisle 12 so that the automatic switching of the vacuum and the automatic milk meter recordings will be made appropriately, that is, the sensor of the milking equipment positioner 11 is required to indicate change of position between each milking of a milking animal.

In a version that does not form part of the claimed invention, one or several milking equipment positioners 11 may each be used to move a milking equipment from a storing position to a milking position.

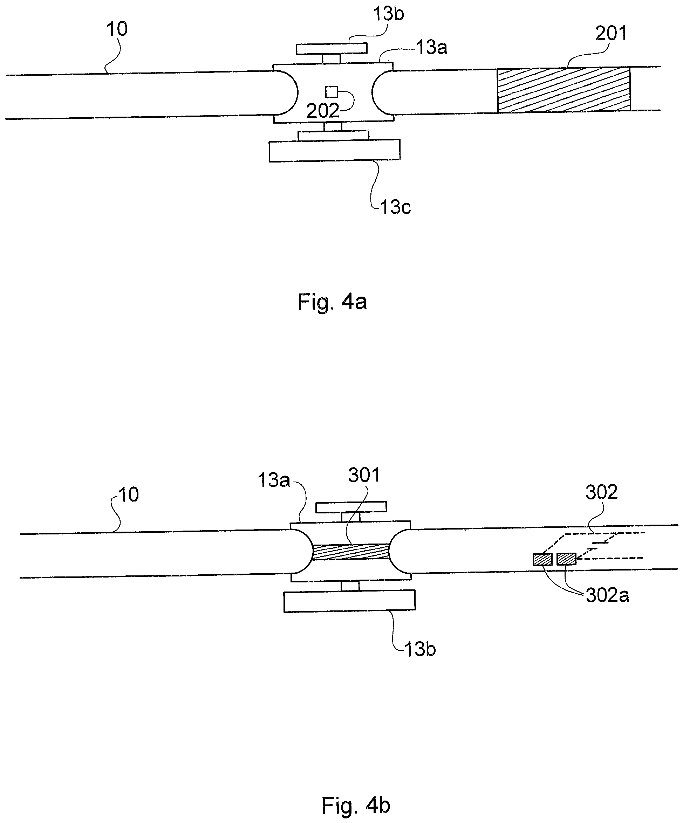

Fig. 4a illustrates a milking equipment positioner according to a yet further embodiment of the invention. The second part 25 comprises here a recognizable, preferably visible, mark 201 and the first part 13 comprises the sensing means in the form of a sensor 202, preferably optical sensor, capable of recognizing the mark 201.

For instance, if the sensor 202 is an optical sensor and is rotated while the first part 13 is moved, a cyclic behavior in the sensed signal will be obtained. As the sensor passes the mark 201, which may be a section of e.g. black color, the cyclic behavior is interrupted as the signal will be considerably lower when detecting reflections from the section of black color. The section of black color 201 has in this embodiment to be of a length which is longer than the circumference of the roll 13a of the first part 13 to ensure that the sensor 202 will be located downwards within the section 201.

The recognizable mark 201 and the sensor 202 may be based on other than light as detection medium. The sensor 202 may be a sensor detecting any kind of electromagnetic or sonic waves and the recognizable mark 201 may be reflecting, forwarding, or transmitting waves recognizable by the sensor 202.

Fig. 4b illustrates a milking equipment positioner according to a still further embodiment of the invention. Here, the first part 13 is advantageously adapted to be moved passed the second part 25 while contacting the second part 25. The first part 13 comprises an electrically resistive, capacitive, or inductive member 301 and the second part 25 comprises the sensing means in the form of an electric circuit 302 having a characteristic, which is influenced by presence of the resistive, capacitive, or inductive member 301.

For instance, the electrically resistive, capacitive, or inductive member 301 may be an electrically conductive band along the circumference of the roll 13a (or the roll 13a may be made of an electrically conductive material) and the electric circuit 302 may comprise an open circuit ending with two adjacent contact paths 302a which are contacted by the electrically conductive band 301 as the first part 13 is moved passed the second part 25, whereupon the open circuit is closed and a detectable current can be flowed.

Alternatively, the second part 25 comprises an electrically resistive, capacitive, or inductive member and the first part 13 comprises the sensing means in the form of an electric circuit having a characteristic, which is influenced by presence of the resistive, capacitive, or inductive member.

While the first part 13 has been described as being adapted to be moved along the support beam 10 in a rolling movement in the illustrated embodiments above, it has not necessarily to be so. The first part 13 may instead be adapted to be moved along the support beam in a sliding movement. Hereby, the embodiments of Figs. 4a-b may be made simpler to the cost of frictional loss while moving the first part 13.

## Claims

1. A milking equipment positioner (11) for moving the milking equipment between at least two milking stalls, the positioner comprising:
- a support beam (10); and
- a first part (13) for holding milking equipment (15), said first part being engagable with said support beam and movable along said support beam between a first (17) position at a first of the at least two milking stalls and a second (19) position at a second of the at least two milking stalls, **characterized in that** said positioner comprises:
- a second part (25) arranged fixedly in or at said support beam between said first and second positions, wherein one of said first and second parts includes:
- sensing means (13c) provided for sensing each time said first part is moved passed said second part; and
- indicating means (13d; 13c) provided for indicating whether said first part is moved to said first position or to said second position based on said sensing.

2. The positioner of claim 1 wherein said indicating means is provided for indicating, preferably visibly or audiably, to a user of said positioner whether said first part is moved to said first position or to said second position.

3. The positioner of claim 1 or 2 wherein said indicating means is provided for indicating to a vacuum supply controller (21) whether said first part is moved to said first position or to said second position to thereby allow said vacuum supply controller to automatically supply vacuum to said milking equipment, optionally after a time delay.

4. The positioner of any of claims 1-3 wherein said indicating means is provided for indicating to a milk meter controller (23) whether said first part is moved to said first position or to said second position to thereby allow said milk meter controller to automatically associate a following milk meter measurement with a new milking stall.

5. The positioner of any of claims 1-4 wherein said first part is adapted to be moved past said second part without contacting said second part and one of said first and second parts comprises a magnet (25a) and the other one of said first and second parts comprises the sensing means in the form of an electric circuit (13c) having a characteristic, which is influenced by presence of said magnet.

6. The positioner of claim 5 wherein said first part comprises said magnet, which is mounted within said support beam; and said second part comprises said electric circuit.

7. The positioner of claim 6 wherein one of said first and second parts comprises a recognizable, preferably visible, mark (201) and the other one of said first and second parts comprises the sensing means in the form of sensor (202), preferably optical sensor, capable of recognizing said mark.

8. The positioner of any of claims 1-4 wherein said first part is adapted to be moved past said second part while contacting said second part and one of said first and second parts comprises an electrically resistive, capacitive, or inductive member (301) and the other one of said first and second parts comprises the sensing means in the form of an electric circuit (302) having a characteristic, which is influenced by presence of said electrically resistive, capacitive, or inductive member.

9. The positioner of any of claims 1-4 wherein said first part comprises the sensing means and the indicating means.

10. The positioner of any of claims 1-9 wherein said support beam is substantially straight and is arranged to be mounted substantially horizontally.

11. The positioner of any of claims 1-10 wherein said support beam is bent (101) and is arranged to be mounted with its convex side (102) facing upwards to thereby allow said first part to be moved from a central part of said support beam and into said first and second positions by aid of gravity.

12. The positioner of any of claims 1-11 wherein said first part comprises attachment means (13b), preferably a hook, ring, or loop, to which said milking equipment is releasably attachable, preferably suspendable.

13. A milking system comprising at least one milking equipment positioner according to any one of the preceding claims, the milking system comprising at least two milking stalls, each capable of housing a milking animal during milking, wherein the support beam is arranged with respect to the milking stalls so that the milking equipment while held by the first part is located (i) at a first one of the milking stalls when the first part is located in the first position and (ii) at a second one of the milking stalls when the first part is located in the second position.

14. A method of indicating position of a milking equipment positioner (11) moving the milking equipment between at least two milking stalls, the positioner comprising a support beam and a first part (13) for holding milking equipment (15), said first part being engagable with said support beam and movable along said support beam between a first (17) position at a first of the at least two milking stalls and a second (19) position at a second of the at least two milking stalls, **characterized by** the steps of:
- sensing each time said first part is moved past a second part (25) arranged fixedly in or at said support beam between said first and second positions; and
- indicating whether said first part is moved to said first position or to said second position based on said sensing.

15. The method of claim 14 wherein said first part is moved past said second part each time without contacting said second part.

16. The method of claim 14 or 15 comprising indicating to a vacuum supply controller (21) whether said first part is moved to said first position or to said second position to thereby allow said vacuum supply controller to automatically supply vacuum to said milking equipment, optionally after a time delay.

17. The method of any of claims 14-16 comprising indicating to a milk meter controller (23) whether said first part is moved to said first position or to said second position to thereby allow said milk meter controller to automatically associate a following milk meter measurement with a new milking stall.

## Patentansprüche

1. Vorrichtung zum Positionieren einer Melkvorrichtung (11) zum Bewegen der Melkvorrichtung zwischen mindestens zwei Melkplätzen, wobei die Vorrichtung zum Positionieren Folgendes umfasst:
- einen Träger (10); und
- einen ersten Teil (13) zum Halten einer Melkvorrichtung (15), wobei der erste Teil mit dem Träger in Eingriff bringbar und den Träger entlang zwischen einer ersten (17) Stellung an einem ersten der mindestens zwei Melkplätze und einer zweiten (19) Stellung an einem zweiten der mindestens zwei Melkplätze bewegbar ist,
**dadurch gekennzeichnet, dass** die Vorrichtung zum Positionieren Folgendes umfasst:
- einen zweiten Teil (25), der fest in oder an dem Träger zwischen der ersten und zweiten Stellung angeordnet ist, wobei der erste oder der zweite Teil Folgendes aufweist:
- ein Erfassungsmittel (13c), das dafür vorgesehen ist, dass es jedes Mal erfasst, wenn der erste Teil an dem zweiten Teil vorbeibewegt wird; und
- ein Anzeigemittel (13d; 13c), das dafür vorgesehen ist, dass es auf der Grundlage der Erfassung anzeigt, ob der erste Teil in die erste Stellung oder die zweite Stellung bewegt wird.

2. Vorrichtung zum Positionieren nach Anspruch 1, wobei das Anzeigemittel dafür vorgesehen ist, dass es vorzugsweise sichtbar oder hörbar einem Benutzer der Vorrichtung zum Positionieren anzeigt, ob der erste Teil in die erste Stellung oder die zweite Stellung bewegt wird.

3. Vorrichtung zum Positionieren nach Anspruch 1 oder 2, wobei das Anzeigemittel dafür vorgesehen ist, dass es einer Vakuumversorgungs-Steuereinrichtung (21) anzeigt, ob der erste Teil in die erste Stellung oder die zweite Stellung bewegt wird, um dadurch zu ermöglichen, dass die Vakuumversorgungs-Steuereinrichtung die Melkvorrichtung automatisch mit Vakuum versorgt, gegebenenfalls nach einer Zeitverzögerung.

4. Vorrichtung zum Positionieren nach einem der Ansprüche 1 bis 3, wobei das Anzeigemittel dafür vorgesehen ist, dass es einer Milchmengenmesser-Steuereinrichtung (23) anzeigt, ob der erste Teil in die erste Stellung oder die zweite Stellung bewegt wird, um dadurch zu ermöglichen, dass die Milchmengenmesser-Steuereinrichtung automatisch eine folgende Messung des Milchmengenmessers mit einem neuen Melkplatz verknüpft.

5. Vorrichtung zum Positionieren nach einem der Ansprüche 1 bis 4, wobei der erste Teil so ausgelegt ist, dass er an dem zweiten Teil vorbeibewegt wird, ohne den zweiten Teil zu berühren, und der erste oder der zweite Teil einen Magneten (25a) umfasst und der andere Teil, erster oder zweiter Teil, das Erfassungsmittel in Form einer elektrischen Schaltung (13c) umfasst, die eine Eigenschaft aufweist, die durch die Gegenwart des Magneten beeinflusst wird.

6. Vorrichtung zum Positionieren nach Anspruch 5, wobei der erste Teil den Magneten umfasst, der in dem Träger montiert ist; und der zweite Teil die elektrische Schaltung umfasst.

7. Vorrichtung zum Positionieren nach Anspruch 6, wobei der erste oder der zweite Teil eine erkennbare, vorzugsweise sichtbare, Markierung (201) umfasst und der andere Teil, erster oder zweiter Teil, das Erfassungsmittel in Form eines Sensors (202), vorzugsweise optischen Sensors, umfasst, der in der Lage ist, die Markierung zu erkennen.

8. Vorrichtung zum Positionieren nach einem der Ansprüche 1 bis 4, wobei der erste Teil so ausgelegt ist, dass er an dem zweiten Teil vorbeibewegt wird, während er den zweiten Teil berührt, und der erste oder der zweite Teil ein ohmsches, kapazitives oder induktives Element (301) umfasst und der andere Teil, erster oder zweiter Teil, das Erfassungsmittel in Form einer elektrischen Schaltung (302) umfasst, die eine Eigenschaft aufweist, die durch die Gegenwart des ohmschen, kapazitiven oder induktiven Elements beeinflusst wird.

9. Vorrichtung zum Positionieren nach einem der Ansprüche 1 bis 4, wobei der erste Teil das Erfassungsmittel und das Anzeigemittel umfasst.

10. Vorrichtung zum Positionieren nach einem der Ansprüche 1 bis 9, wobei der Träger im Wesentlichen gerade ist und so angeordnet ist, dass er im Wesentlichen waagerecht montiert wird.

11. Vorrichtung zum Positionieren nach einem der Ansprüche 1 bis 10, wobei der Träger gebogen (101) ist und so angeordnet ist, dass er mit der konvexen Seite (102) nach oben gewandt montiert ist und dadurch der erste Teil unterstützt durch die Schwerkraft von einem mittigen Teil des Trägers aus und in die erste und zweite Stellung hinein bewegt werden kann.

12. Vorrichtung zum Positionieren nach einem der Ansprüche 1 bis 11, wobei der erste Teil Befestigungsmittel (13b), vorzugsweise einen Haken, Ring oder eine Öse, umfasst, an denen die Melkvorrichtung lösbar anbringbar, vorzugsweise anhängbar ist.

13. Melksystem, das mindestens eine Vorrichtung zum Positionieren einer Melkvorrichtung nach einem der vorhergehenden Ansprüche umfasst, wobei das Melksystem mindestens zwei Melkstände umfasst, die jeweils in der Lage sind, ein Milchtier während des Melkens aufzunehmen, wobei der Träger bezogen auf die Melkstände angeordnet ist, sodass sich die Melkvorrichtung, während sie von dem ersten Teil gehalten wird, (i) an einem ersten der Melkplätze befindet, wenn sich der erste Teil in der ersten Stellung befindet, und (ii) an einem zweiten der Melkplätze, wenn sich der erste Teil in der zweiten Stellung befindet.

14. Positionsanzeigeverfahren für eine Vorrichtung zum Positionieren einer Melkvorrichtung (11), die die Melkvorrichtung zwischen mindestens zwei Melkplätzen bewegt, wobei die Vorrichtung zum Positionieren einen Träger und einen ersten Teil (13) zum Halten einer Melkvorrichtung (15) umfasst, wobei der erste Teil mit dem Träger in Eingriff bringbar und den Träger entlang zwischen einer ersten (17) Stellung an einem ersten der mindestens zwei Melkplätze und einer zweiten (19) Stellung an einem zweiten der mindestens zwei Melkplätze bewegbar ist, **gekennzeichnet durch** folgende Schritte:
- Erfassen von jedem Mal, wenn der erste Teil an einem zweiten Teil (25) vorbeibewegt wird, der fest in oder an dem Träger zwischen der ersten und zweiten Stellung angeordnet ist; und
- auf der Grundlage der Erfassung Anzeigen, ob der erste Teil in die erste Stellung oder die zweite Stellung bewegt wird.

15. Verfahren nach Anspruch 14, wobei der erste Teil jedes Mal an dem zweiten Teil vorbeibewegt wird, ohne dass er den zweiten Teil berührt.

16. Verfahren nach Anspruch 14 oder 15, umfassend, dass einer Vakuumversorgungs-Steuereinrichtung (21) angezeigt wird, ob der erste Teil in die erste Stellung oder die zweite Stellung bewegt wird, um dadurch zu ermöglichen, dass die Vakuumversorgungs-Steuereinrichtung die Melkvorrichtung automatisch mit Vakuum versorgt, gegebenenfalls nach einer Zeitverzögerung.

17. Verfahren nach einem der Ansprüche 14 bis 16, umfassend, dass einer Milchmengenmesser-Steuereinrichtung (23) angezeigt wird, ob der erste Teil in die erste Stellung oder die zweite Stellung bewegt wird, um dadurch zu ermöglichen, dass die Milchmengenmesser-Steuereinrichtung automatisch eine folgende Messung des Milchmengenmessers mit einem neuen Melkplatz verknüpft.

## Revendications

1. Dispositif de positionnement d'équipement de traite (11) destiné à déplacer l'équipement de traite entre au moins deux stalles de traite, le dispositif de positionnement comprenant :
- une poutre de support (10) ; et
- une première partie (13) destinée à maintenir un équipement de traite (15), ladite première partie pouvant être mise en prise avec ladite poutre de support et étant mobile le long de ladite poutre de support entre une première (17) position au niveau de la première des au moins deux stalles de traite et une seconde (19) position au niveau de la seconde des au moins deux stalles de traite, **caractérisé en ce que** ledit dispositif de positionnement comprend :
- une seconde partie (25) agencée fixement dans ou sur ladite poutre de support entre lesdites première et seconde positions, une desdites première et seconde parties comportant :
- un moyen de détection (13c) prévu pour détecter chaque passage de ladite première partie devant ladite seconde partie ; et
- un moyen d'indication (13d ; 13c) prévu pour indiquer, sur la base de ladite détection, si ladite première partie est déplacée dans ladite première position ou dans ladite seconde position.

2. Dispositif de positionnement selon la revendication 1, dans lequel ledit moyen d'indication est prévu pour indiquer, de préférence de manière visible ou audible, à un utilisateur dudit dispositif de positionnement si ladite première partie est déplacée dans ladite première position ou ladite seconde position.

3. Dispositif de positionnement selon la revendication 1 ou 2, dans lequel ledit moyen d'indication est prévu pour indiquer à un dispositif de commande d'alimentation en vide (21) si ladite première partie est déplacée dans ladite première position ou ladite seconde position afin de permettre ainsi au dispositif de commande d'alimentation en vide d'alimenter automatiquement ledit équipement de traite en vide, en option après une temporisation.

4. Dispositif de positionnement selon l'une quelconque des revendications 1 à 3, dans lequel ledit moyen d'indication est prévu pour indiquer à un dispositif de commande de compteur à lait (23) si ladite première partie est déplacée dans ladite première position ou ladite seconde position afin de permettre ainsi au dispositif de commande de compteur à lait d'associer automatiquement une mesure suivante du compteur à lait à une nouvelle stalle de traite.

5. Dispositif de positionnement selon l'une quelconque des revendications 1 à 4, dans lequel ladite première partie est adaptée pour être passée devant ladite seconde partie sans toucher ladite seconde partie et l'une desdites première et seconde parties comprend un aimant (25a) et l'autre desdites première et seconde parties comprend le moyen de détection sous la forme d'un circuit électrique (13c) présentant une caractéristique qui est influencée par la présence dudit aimant.

6. Dispositif de positionnement selon la revendication 5, dans lequel ladite première partie comprend ledit aimant, qui est monté dans ladite poutre de support ; et ladite seconde partie comprend ledit circuit électrique.

7. Dispositif de positionnement selon la revendication 6, dans lequel l'une desdites première et seconde parties comprend une marque (201) reconnaissable, de préférence visible, et l'autre desdites première et seconde parties comprend le moyen de détection sous la forme d'un capteur (202), de préférence un capteur optique, capable de reconnaître ladite marque.

8. Dispositif de positionnement selon l'une quelconque des revendications 1 à 4, dans lequel ladite première partie est adaptée pour être passée devant ladite seconde partie tout en touchant ladite seconde partie et l'une desdites première et seconde parties comprend un élément électriquement résistif, capacitif ou inductif (301) et l'autre desdites première et seconde parties comprend le moyen de détection sous la forme d'un circuit électrique (302) présentant une caractéristique qui est influencée par la présence dudit élément électriquement résistif, capacitif ou inductif.

9. Dispositif de positionnement selon l'une quelconque des revendications 1 à 4, dans lequel ladite première partie comprend le moyen de détection et le moyen d'indication.

10. Dispositif de positionnement selon l'une quelconque des revendications 1 à 9, dans lequel ladite poutre de support est sensiblement droite et est agencée pour être montée sensiblement de manière horizontale.

11. Dispositif de positionnement selon l'une quelconque des revendications 1 à 10, dans lequel ladite poutre de support est courbée (101) et est agencée pour être montée avec son côté convexe (102) orienté vers le haut afin de permettre ainsi à ladite première partie d'être déplacée depuis une partie centrale de ladite poutre de support et dans lesdites première et seconde positions à l'aide de la gravité.

12. Dispositif de positionnement selon l'une quelconque des revendications 1 à 11, dans lequel ladite première partie comprend un moyen de fixation (13b), de préférence un crochet, un anneau ou une boucle, auquel l'équipement de traite peut être fixé, de préférence suspendu, de manière amovible.

13. Système de traite comprenant au moins un dispositif de positionnement d'équipement de traite selon l'une quelconque des revendications précédentes, le système de traite comprenant au moins deux stalles de traite, chacune capable de recevoir un animal de traite pendant la traite, la poutre de support étant agencée par rapport aux stalles de traite de telle sorte que l'équipement de traite, tout en étant maintenu par la première partie, est situé (i) au niveau d'une première des stalles de traite quand la première partie est située dans la première position et (ii) au niveau d'une seconde des stalles de traite quand la première partie est située dans la seconde position.

14. Procédé pour indiquer la position d'un dispositif de positionnement d'équipement de traite (11) déplaçant l'équipement de traite entre au moins deux stalles de traite, le dispositif de positionnement comprenant une poutre de support et une première partie (13) destinée à maintenir un équipement de traite (15), ladite première partie pouvant être mise en prise avec ladite poutre de support et étant mobile le long de ladite poutre de support entre une première (17) position au niveau d'une première des au moins deux stalles de traite et une seconde (19) position au niveau d'une seconde des au moins deux stalles de traite, **caractérisé par** les étapes consistant à :
- détecter chaque passage de ladite première partie devant une seconde partie (25) agencée fixement dans ou sur ladite poutre de support entre lesdites première et seconde positions ; et
- indiquer, sur la base de ladite détection, si ladite première partie est déplacée dans ladite première position ou dans ladite seconde position.

15. Procédé selon la revendication 14, dans lequel ladite première partie est passée devant ladite seconde partie à chaque fois sans toucher ladite seconde partie.

16. Procédé selon la revendication 14 ou 15, comprenant l'étape consistant à indiquer à un dispositif de commande d'alimentation en vide (21) si ladite première partie est déplacée dans ladite première position ou dans ladite seconde position afin de permettre ainsi audit dispositif de commande d'alimentation en vide d'alimenter automatiquement ledit équipement de traite en vide, en option après une temporisation.

17. Procédé selon l'une quelconque des revendications 14 à 16, comprenant l'étape consistant à indiquer à un dispositif de commande de compteur à lait (23) si ladite première partie est déplacée dans ladite première position ou dans ladite seconde position afin de permettre ainsi au dispositif de commande de compteur à lait d'associer automatiquement une mesure suivante du compteur à lait à une nouvelle stalle de traite.
